# EUROPÄISCHE PATENTSCHRIFT

(11) **EP 1 011 308 B1**
(45) Veröffentlichungstag und Bekanntmachung des Hinweises auf die Patenterteilung: **28.08.2002**
(21) Anmeldenummer: 97909285.5
(22) Anmeldetag: 18.09.1997
(51) Int. Cl.: A01G 1/04

(54) **ABDECKMATERIAL FÜR MIETEN UND BEETE ZUR CHAMPIGNONZUCHT**
COVERING MATERIAL FOR STACKS AND SITTING-OUT AREAS IN MUSHROOM CULTURE
MATERIAU DE RECOUVREMENT POUR MEULES ET PARTERRES EN VUE DE LA CULTURE DE CHAMPIGNONS

(30) Priorität: 20.09.1996 DE 19638481
(43) Veröffentlichungstag der Anmeldung: 28.06.2000
(73) Patentinhaber: Stora Reisholz GmbH, 40589 Düsseldorf (DE)
(72) Erfinder: RETTIG, Bernd, D-41468 Neuss (DE); LELLEY, Jan, D-50935 Köln (DE); JAEGER, Rudolf, D-47807 Krefeld (DE)
(86) Internationale Anmeldenummer: EP9705112
(87) Internationale Veröffentlichungsnummer: WO98011771

(56) Entgegenhaltungen:
- EP-A- 0 556 150
- AU-B- 527 928
- DE-A- 4 416 030
- FR-A- 2 550 913
- FR-A- 2 603 767
- US-A- 4 079 543
- US-A- 5 251 398
- US-A- 5 443 612

## Beschreibung

Die Erfindung betrifft ein sorptionsfähiges Abdeckmaterial für Mieten und Beete zur Champignonzucht nach dem Oberbegriff des Anspruches 1.

Abdeckmaterialien für Mieten und Beete zur Champignonzucht unterscheiden sich von den eigentlichen Substraten für Champignons in wesentlichen Punkten. Während das Substrat zum größten Teil aus vorbehandeltem Pferdemist besteht, soll das Abdeckmaterial, wie schon der Name sagt, das Substrat abdecken, die Pilze mit ausreichender Feuchtigkeit versorgen und ein Milieu schaffen, in dem eine intensive Fruchtkörperbildung stattfindet. Nach der Ernte der Pilzkultur ist das Substrat bezüglich der Nährstoffe erschöpft. Derzeit wird hauptsächlich Schwarztorf und in kleineren Mengen auch Weißtorf zur Bereitung von Abdeckmaterialien herangezogen. Aus Gründen des Naturschutzes und der Schonung der Torflagerstätten ist es wichig, in der Champignonwirtschaft weitgehend auf den Einsatz von Torf zu verzichten.

Abdeckmaterialien zum Einsatz in der Landwirtschaft aus faserhaltigen Materialien sind allgemein bekannt. So betrifft die US-5,251,398 ein Verfahren zum Schutz von Pflanzen vor Frost unter Verwendung von hydratisierten Zellstoffasern.

Die EP-0 556 150 lehrt ein auf einer Papiermaschine hergestelltes bahnförmiges Material, das unter anderem auch Torf als Faserstoff enthalten kann, für den Einsatz in der Landwirtschaft zur Vermeidung von Wind- oder Wassererosion.

Aus der DE-44 16 030 A1 ist ein gattungsgemäßes Abdeckmaterial bekannt geworden, das durch Zerkleinern von Altpapier unter Hinzufügung von Wasser erhalten werden kann. Nachteilig bei diesem Verfahren ist, daß es durch allfällig im Altpapier enthaltenden Unrat, insbesondere Glasscherben, zu Störungen in der Aufbereitungsanlage kommen kann und dieser Unrat zusätzliche Beseitigungskosten verursacht. Ein weiterer Nachteil besteht darin, daß der Altpapiermarkt starken Schwankungen unterworfen ist, so daß eine gleichmäßige Versorgung mit einem preiswerten Rohstoff für das beschriebene Verfahren nicht gegeben ist.

Aufgabe der Erfindung ist es daher, ein Abdeckmaterial zur Verfügung zu stellen, das aus praktisch im Überfluß vorhandenen Ausgangsstoffen besteht und dessen Bereitstellung ohne aufwendigen Maschinenpark ermöglicht wird.

Die Lösung der Aufgabe erfolgt durch den kennzeichnenden Teil des Anspruches 1. Vorteilhafte Weiterbildungen der Erfindung sind in den Unteransprüchen 2 bis 4 angegeben.

Das erfindungsgemäße Abdeckmaterial für Mieten und Beete zur Champignonzucht aus Torf, Zellstoff- und Holzstoffasern in Abmischung mit Mineralstoffen ist durch die Kombination der folgenden Merkmale gekennzeichnet:

Ein erster Teil in Höhe von 50 bis 80 Vol.% besteht aus Filterkuchen, bestehend aus Reststoffen der Papierfabrikation, nämlich 40 bis 60 % unbrauchbarer Fasern und 60 bis 40 % unbrauchbarer Weißpigmente.

Diese Reststoffe fallen in der chemisch-mechanischen Restabwasserklärung der Papierfabrik als Schlamm an. Dieser wird mittels Filterpresse oder Siebbandpresse auf einen Trockengehalt von 35 bis 60 Gew.% entwässert und steht dann als eine Ausgangskomponente zur Verfügung.

Ein zweiter Anteil von 20 bis 50 Vol.% besteht aus Zuschlagstoffen, ausgewählt aus Torf, pflanzlichen Fasern und/oder gemahlenem Kalkstein und/oder Mergel und/oder Scheideschlamm aus der Zuckerindustrie. Die Zuschlagstoffe verleihen dem Abdeckmaterial die gewünschten Eigenschaften hinsichtlich der Feinkrümeligkeit, Struktur, Luftdurchlässigkeit, Widerstand gegen Verschlemmen bei Beregnung und Pufferkapazität hinsichtlich des pH-Wertes. Als pflanzliche Fasern können neben Torf auch Kokosfasem, Abfälle aus der Hanf- und Flachsverarbeitung sowie Baumwollabfälle eingesetzt werden, um nur einige Beispiele zu nennen. Es muß lediglich dafür Sorge getragen werden, daß die verwendeten pflanzlichen Fasern nicht zu lang sind, um ein Verspinnen zu vermeiden.

Das Verhältnis der organischen zu den anorganischen Anteilen des Abdeckmaterials beträgt 90 : 10 % bis 60 : 40 % und wird in einfacher Weise durch Variation der Anteile an Filterkuchen und Zuschlagstoffen ausgewählt. Es versteht sich von selbst, daß dazu die Zusammensetzung der einzelnen Komponenten bezüglich organischem und anorganischem Bestandteil vorbekannt ist.

Die Wasserspeicherfähigkeit des erfindungsgemäßen Abdeckmaterials wird durch die einzelnen aufgeführten Komponenten derart gefördert, daß sie einen Wert bis zum 3-fachen des atro-Eigengewichtes erreicht.

Um das Pilzwachstum nicht nachteilig zu beeinflussen, beträgt der pH-Wert des Abdeckmaterials, gemessen in wäßriger Aufschlemmung, 6,5 bis 8,0. Werte darüber oder darunter werden durch Erhöhung des Anteils puffender Mineralstoffe korrigiert. Als solche kommen Kaolin oder Calciumcarbonat in Betracht.

Das erfindungsgemäße Abdeckmaterial ist durch das weitere Merkmal gekennzeichnet, daß es einen bezüglich Kalium, Phosphor und Stickstoff reduzierten Nährstoffgehalt aufweist. Damit wird eine der Hauptforderungen, Unterdrückung des Wachsens von Konkurrenzorganismen auf dem Abdeckmaterial, erreicht. Da nun der Filterkuchen aus der Papierfabrikation nur einen ganz geringen Anteil an Nährstoffen enthält, wird dieses Merkmal auf sehr einfache Weise erfüllt.

Der Anteil an Nährstoffgehalt wird, bezogen auf Kalium, < 0,15 %, auf Stickstoff < 0,5 % und auf Phosphor < 0,08 % eingestellt - alle Angaben bezogen auf atro Abdeckmaterial. Diese Vorgabe wird dadurch gelöst, daß das Verhältnis Filterkuchen : Zuschlagstoff zugunsten des Filterkuchens gewählt wird.

In einer bevorzugten Ausführung der Erfindung enthalten die Mineralstoffe Schichtsilikate, wie Kaolin oder Bentonite. Schichtsilikate sind in der Lage, unter Wassereinfluß zu quellen und so die Wasseraufnahme des Abdeckmaterials positiv zu beeinflussen. Kaolin hat den weiteren Vorteil, daß es ein Alkalipuffervermögen aufweist und somit den pH-Wert des Abdeckmaterials positiv beeinflussen kann.

Bei einer weiteren bevorzugten Ausführung der Erfindung bestehen die Mineralstoffe aus in der Papierindustrie eingesetzten Weißpigmenten, wie z. B. Kaolin, Calciumcarbonat, Talkum, Titandioxid und/oder Satinweiß. Die Weißpigmente finden sich insbesondere dann in dem Filterkuchen, wenn die Papierfabrik gestrichene Papiere erzeugt. Damit erübrigt sich z. B. die gesonderte Zugabe von Kaolin oder gemahlenem Kalkstein als Zuschlagstoff mit dem Ziel der pH-Abpufferung. Auch Satinweiß besitzt aufgrund seiner Alkalität ein großes Säurebindevermögen.

Ergibt eine Untersuchung des Filterkuchens einen Restnährstoffgehalt oberhalb der oben angegebenen Grenzwerte, wird dieser in einer weiteren vorteilhaften Ausbildung der Erfindung dadurch reduziert, daß der Filterkuchen einer zusätzlichen Rotte unterzogen wird.

Die Erfindung wird an einem Beispiel näher erläutert.

Für die Bereitstellung des erfindungsgemäßen Abdeckmaterials wird ein Filterkuchen mit folgenden Eigenschaften eingesetzt.

| Trockengehalt | Veraschungsrückstand | |
|---|---|---|
| 38 bis 42 % | 35,8 % | |
| | | |
| pH-Wert 7,4 | davon: | 25 % Kaolin |
| | | 5 % Talkum |
| | | 5,8 % CaCO₃ |
| | | |
| Organischer Bestandteil: | | |
| Zellstoff- + Holzstoffaser. | | |

Zu 70 kg (atro) Filterkuchen werden 30 kg atro Weißtorf mit einem Trockengehalt von 70 % hinzugefügt und intensiv vermischt. Das daraus erhaltene Abdeckmaterial weist eine feinkrümelige Struktur auf. Der Feuchtegehalt beträgt 54 %. Die Analyse der Pflanzennährstoffgehalte ergibt bezüglich Kalium 0,09 %, Stickstoff 0,32 % und Phosphor, berechnet als P₂O₅, 0,04 % - alle Werte bezogen auf atro Substanz.

## Patentansprüche

1. Sorptionsfähiges Abdeckmaterial für Mieten und Beete zur Champignonzucht, das auf das Champignonsubstrat aufgebracht wird, enthaltend Torf-, Zellstoff- und Holzstoffasern in Abmischung mit Mineralstoffen mit einem überwiegenden Feinkornanteil < 10 mm, **gekennzeichnet durch** die Kombination folgender Merkmale: das Abdeckmaterial besteht aus
a) 50 bis 80 Gew.% Filterkuchen der Papierfabrikation,
b) 20 bis 50 Gew.% aus Zuschlagstoffen, ausgewählt aus Torf, pflanzlichen Naturfasern und/oder gemahlenem Kalkstein und/oder Mergel,
wobei das Abdeckmaterial
c) ein Verhältnis organischer Anteil: anorganischer Anteil von 90 : 10 bis 60 : 40 % aufweist,
d) eine Wasserspeicherfähigkeit bis zum 3-fachen des atro-Eigengewichtes aufweist,
e) auf einen pH-Wert von 6,5 bis 8,0 eingestellt ist und
f) bezüglich des Nährstoffgehaltes, bezogen auf Kalium, < 0,15 % auf Stickstoff < 0,5 % und auf Phosphor < 0,08 % eingestellt ist.

2. Abdeckmaterial nach Anspruch 1, **dadurch gekennzeichnet, daß** die Mineralstoffe zusätzlich quellbare Schichtsilikate enthalten.

3. Abdeckmaterial nach Anspruch 1, **dadurch gekennzeichnet, daß** die Mineralstoffe in der Papierindustrie eingesetzte Weißpigmente enthalten.

4. Abdeckmaterial nach einem der Ansprüche 1 bis 4, **dadurch gekennzeichnet, daß** der Filterkuchen einer zusätzlichen Rotte unterzogen worden ist.

## Claims

1. Absorbent covering material for stacks and beds for mushroom cultivation, which covering material is placed on top of the mushroom substrate and comprises peat fibres, cellulose fibres and lignin fibres in admixture with mineral substances having a predominant proportion of fines < 10 mm, **characterised by** the combination of the following features:
the covering material consists of
a) from 50 to 80 % by weight filter cake from paper manufacture,
b) from 20 to 50 % by weight fillers, selected from peat, vegetable natural fibres
and/or ground limestone and/or marl,
wherein the covering material:
c) has a ratio of organic:inorganic content of from 90:10 % to 60:40 %,
d) has a water storage capacity of up to three times the absolutely dry own weight,
e) is adjusted to a pH of from 6.5 to 8.0, and
f) in respect of the nutrient content, is adjusted to < 0.15 % potassium, < 0.5 % nitrogen and < 0.08 % phosphorus.

2. Covering material according to claim 1, **characterised in that** the mineral substances additionally comprise layered silicates capable of swelling.

3. Covering material according to claim 1, **characterised in that** the mineral substances comprise white pigments used in the paper industry.

4. Covering material according to any one of claims 1 to 4, **characterised in that** the filter cake is subjected to additional retting.

## Revendications

1. Matière de recouvrement absorbante pour les meules et les planches destinées à la culture des champignons, qui est disposée sur le substrat pour les champignons et qui contient de la tourbe, des fibres de cellulose et des fibres de pâte de bois en mélange avec des produits minéraux ayant une proportion prédominante de petits grains < 10 mm, matière de recouvrement qui est **caractérisée par** la combinaison des caractères suivants : la matière de recouvrement est constituée de
a) 50 à 80 % en poids de gâteau de filtration de la fabrication du papier, et de
b) 20 à 50 % en poids de produits ajoutés, choisis parmi la tourbe, les fibres végétales naturelles et/ou le calcaire broyé finement et/ou la marne,
la matière de recouvrement présente
c) un rapport de la partie organique à la partie minérale de 90:10 % à 60:40 %, et
d) une capacité d'accumulation d'eau de jusqu'à 3 fois le poids propre à l'état sec,
e) la matière de recouvrement est réglée à un pH de 6,5 à 8,0, et
f) en ce qui concerne les teneurs en éléments nutritifs, la matière de recouvrement est réglée à une teneur en potassium inférieure à 0,15 %, une teneur en azote inférieure à 0,5 % et une teneur en phosphore inférieure à 0,08 %.

2. Matière de recouvrement selon la revendication 1, **caractérisée en ce que** les produits minéraux contiennent en plus des silicates stratifiés susceptibles de gonfler.

3. Matière de recouvrement selon la revendication 1, **caractérisée en ce que** les produits minéraux contiennent des pigments blancs utilisés dans l'industrie du papier.

4. Matière de recouvrement selon l'une quelconque des revendications 1 à 3, **caractérisée en ce que** le gâteau de filtration a été soumis à une calcination supplémentaire.
